# EUROPEAN PATENT APPLICATION

(11) **EP 3 419 223 A1**
(43) Date of publication of application: **26.12.2018**
(21) Application number: 18178431.5
(22) Date of filing: 19.06.2018
(51) Int. Cl.: H04L 12/28

(54) **APPLIANCE FAILURE PREDICTION**

(30) Priority: 20.06.2017 US 201762522331 P
(71) Applicant: THOMSON LICENSING, 92130 Issy les Moulineaux (FR)
(72) Inventor: ERIKSSON, Brian Charles, Los Altos, CA California 94022 (US); PUDHIYAVEETIL, Ajith, Los Altos, CA California 94022 (US); SUN, Yifan, Los Altos, CA California 94022 (US); DING, Weicong, Los Altos, CA California 94022 (US)
(74) Representative: Vidon Brevets & Stratégie

(57) **Abstract**

A method to determine an operational status of one appliance includes sampling a plurality of sensors monitoring operation of a plurality of appliances. Sensor sampling may relate to energy input, temperature output, audio noise output, and vibration output. The sampling producing composite sensor measurements; the sensors not dedicated to any particular appliance. Filtering 215a, 215b, ... 215n the composite sensor measurements for information for the one appliance is accomplished to remove sampled data that represents appliances other than the one appliance. A comparison of the sensor data for the one appliance with the reference information of the one appliance is determined. If an operation anomaly is present in the information for the particular appliance, a notification is transmitted 240 to a user device concerning the operation of the one appliance. Sensor filtering blocks 215a, 215b, ...215n are filters used to discriminate for a specific device/appliance. This filter block is used to filter out other devices/appliances that might be operating concurrently in the environment. Sensor signal deviation blocks 220a, 220b, through 220n calculate the deviation, if any, from the filtered sensor data for a given device/appliance from block 215a, 215b, through 215n and the expected normal sensor data for one device/appliance from the database 210. The entire set of sensor deviation data outputs from blocks 220a, 220b, through 220n is a collection of deviations for one appliance. Block 230 calculates the sum of all sensor deviation calculations from the outputs of blocks 220a, 220b, through 220n. The output of the 220a, 220b, through 220n blocks can be considered multiple votes on whether there is a failure. The configuration is useful to collect, filter, and disambiguate sensor measurements so that appliance data may be analyzed to perform failure prediction and provide alerts to a user.

## Description

### CROSS REFERENCE TO RELATED APPLICATIONS

This application claims the benefit of United States provisional patent application No. 62/522,331 filed 20 June 2017 and is incorporated by reference herein in its entirety for all purposes.

### FIELD

The present principles relate to Internet-of-Things sensor systems, specifically, they relate to a system to detect appliance anomalies which can lead to appliance failure.

### BACKGROUND

Major appliances inside the home, such as refrigerators, dish washers, clothes washers, clothes dryers and the like can start wearing out or stop working suddenly. Even minor appliances, such as toasters, mixers, vacuum cleaners and the like may fail without warning. The ability to predict the failure of an appliance could allow for better customer satisfaction and decreased customer service calls.

Wireless internet of things (IoT) sensors such as temperature sensors, energy sensors, noise sensors (audio sensors), vibration sensors and the like allow for varying levels of information to be collected about appliance operation that can be relevant to the failure of an appliance. The information includes usual noise dB levels produced by the appliances, the amount of vibration, energy consumption of the devices on a daily basis and the temperature of the appliances. Unfortunately, having a collection of sensors on each appliance is costly, requires time-consuming upkeep (making sure all batteries are charged and replacing failed sensors), and may be considered redundant. Appliance manufacturers generally include failure diagnostic features using a limited set of internal sensors on new and high-end major appliances.

### SUMMARY

This summary is provided to introduce a selection of concepts in a simplified form as a prelude to the more detailed description that is presented later. The summary is not intended to identify key or essential features, nor is it intended to delineate the scope of the claimed subject matter.

In one embodiment, method to determine an operational status of an appliance includes sampling a plurality of sensors monitoring operation of a plurality of appliances, the sampling producing composite sensor measurements, where the sensors are not dedicated to any particular appliance. Filtering the composite sensor measurements for the sensor data of one appliance is performed. The filtering removes sampled data that represents appliances other than the one appliance. The sensor data for the one appliance is compared with reference information for the one appliance and is used to determine if an operation anomaly is present in the one appliance. Then, a message concerning the operation of the one appliance is transmitted.

In one aspect of the method, transmitting a message concerning the operation of the one appliance to a user interface includes transmitting a message concerning an operation anomaly of the one appliance. The operation anomaly may be associated with a potential failure of the one appliance. The sampling a plurality of sensors includes sampling energy input, temperature output, audio noise output, and vibration output.

In another aspect of the method, comparing the sensor data for the one appliance with reference information for the one appliance includes comparing reference information indicating one of more of (a) an existing profile of the one appliance, and (b) historical data measurements for the one appliance.

In another aspect of the method, transmitting a message concerning the operation of the one appliance includes transmitting a message of one or more of (a) an identification the one appliance, (b) a confidence interval concerning potential failure of the one appliance, and (c) a type a sensor involved in an operation anomaly to a mobile phone.

In one embodiment, a computer program product includes instructions, which when executed by a computer, cause the computer to carry out the method described herein. Also, a computer readable data carrier is contemplated that has stored thereon instructions, which when executed by a computer, cause the computer to carry out the method described herein.

In one embodiment, an apparatus to determine an operational status of an appliance includes an interface to a network, the network accessing data from a plurality of sensors. A processor in communication with the plurality of sensors via the network interface is configured to sample the plurality of sensors during operation of a plurality of appliances, the sampling producing composite sensor measurements, the sensors not dedicated to any particular appliance. The processor is configured to filter the composite sensor measurements to detect sensor data for one appliance from the composite sensor measurements. The processor is configured to compare the sensor data for the one appliance with reference information for the one appliance to determine if an operation anomaly is present. The apparatus includes a transmitter to transmit a message concerning the operation anomaly to a user interface.

In another aspect, the apparatus is a gateway. The apparatus transmits a message concerning the operation anomaly to a mobile device. The interface to the network of the apparatus accesses the composite sensor measurements from a plurality of sensors using wireless communication.

Additional features and advantages will be made apparent from the following detailed description of illustrative embodiments which proceeds with reference to the accompanying figures. The drawings are for purposes of illustrating the concepts of the disclosure and is not necessarily the only possible configuration for illustrating the disclosure. Features of the various drawings may be combined unless otherwise stated.

### BRIEF DESCRIPTION OF THE DRAWINGS

The foregoing summary, as well as the following detailed description of illustrative embodiments, is better understood when read in conjunction with the accompanying drawings, which are included by way of example, and not by way of limitation with regard to the present principles. In the drawings, like numbers represent similar elements.
Figure 1 is a depiction of an environment in which aspects of the disclosure may operate;
Figure 2 is a functional block diagram having aspects of the disclosure;
Figures 3 depicts an example flow diagram for a gateway type device having aspects of the disclosure; and
Figure 4 is a block diagram having aspects of the disclosure.

### DETAILED DISCUSSION OF THE EMBODIMENTS

In the following description of various illustrative embodiments, reference is made to the accompanying drawings, which form a part thereof, and in which is shown, by way of illustration, how various embodiments may be practiced. It is to be understood that other embodiments may be utilized, and structural and functional modification may be made without departing from the scope of the present principles.

The configuration disclosed herein is useful to collect, filter, and disambiguate sensor measurements so that appliance data may be analyzed to perform failure prediction and provide alerts to a user. In one aspect of the disclosure, using a collection of sensors in an environment, such as IoT sensors in a home environment, is useful to detect failure of a nearby appliance device. Although a home environment is discussed, the principles of the disclosure equally apply to a commercial or work environment. By using a single set of sensors to monitor multiple devices, easier sensor management and reduction of monitoring infrastructure can be accomplished.

Sensors may be added to each appliance, such as a group of dedicated sensors for a refrigerator, but the sensor set may have to be duplicated for each appliance where it is desirable to perform operational analysis monitoring or failure prediction. A better choice is to utilize a group of sensors in rough proximity to an appliance to be monitored. In this manner, a single set of sensors may be utilized to monitor multiple appliances located nearby. But, by removing the sensors from the appliance being monitored, an additional step of disambiguating is required to determine which device in the environment is producing data. The disambiguation step is necessary to determine which of the multiple nearby appliances is the one that may fail or has failed. Using a set of device profiles (generated via stored device data, a user training step, or learned automatically), the disclosure determines which appliances in the environment are currently active. Using this information, the IoT sensor signals are filtered before detecting an appliance anomaly or failure.

In an aspect of the disclosure, IoT sensor data is aggregated on a device, such as a gateway device, and machine learning techniques are used to build an anomaly detection model that identifies unexpected behavior from an appliance based on the historical data and may notify a user on his/her smartphone about an appliance having a problem.

Additionally, data from these sensors can be combined with energy data to get more insightful information to exactly identify the problem with the appliance. For example, in the case of a refrigerator, a temperature sensor can help identify if it is heating up more than normal which may be caused of accumulation of dust in the exhaust fan's vents which prevents the heat from dissipating and thus causing the refrigerator to heat up. Identifying this problem in the early stages and notifying the user gives the user an opportunity to clean the vent and prevent the appliance from breaking down prematurely.

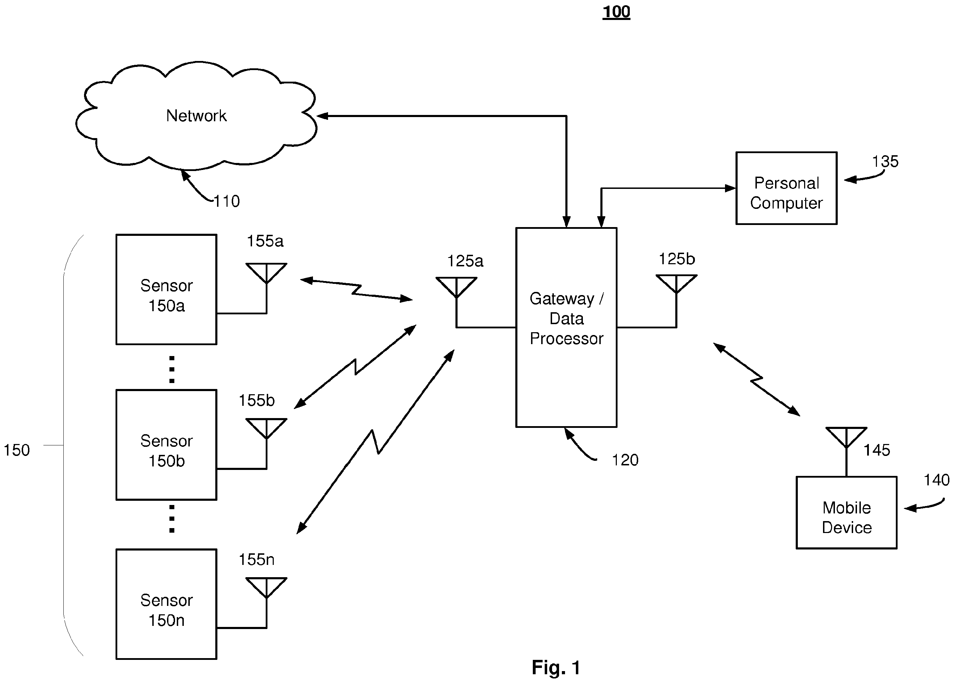

Figure 1 depicts an environment in which the principles of the disclosure may operate. In one environment, a device, such as a gateway 120, wirelessly collects sensor data or measurements, such as from IoT sensors, from a sensor group 150. Sensors can include sensor 150a, 150b, and up to sensor 150n having wireless interfaces 155a, 155b, and up to 155n, respectively. Gateway 120 can receive the low level wireless transmission from the wireless transmitters of the sensors via wireless receiver antenna 125a. Although wireless communication between the sensor set 150 and the gateway 120 is depicted in Figure 1, other types of sensor connectivity are also contemplated. For example, a wired interface or an interface via network 110 where one or more of the IoT sensors in sensor set 150 offers its data over network 110 to gateway 120. One example of such an interface is an AC power consumption interface where total or subtotal power consumption is measured by a utility and provided online for utility customer use.

In the example environment of Figure 1, the gateway 120 has a network interface to network 110 for obtaining profile data on appliances in the home. For example, if a clothes dryer is one of the multiple monitored appliances, manufacturer data may provide energy consumption profile expectations of a typical build of the clothes dryer according to model number. Other profile information may also be obtained such as audio noise level, vibration level, operating time, temperature rise while operational, expected mean time between failure (MTBF). and other operational criteria.

The gateway 120 of Figure 1 may have a connection to a personal computer (PC) 135 or other user interface that allows a user to configure both the gateway 120 and to program aspects of the disclosed innovation. Another example user interface is mobile device 140 communicating via wireless connection between gateway 120 and mobile device 140. Such a mobile device could be a tablet, remote control, personal digital assistant (PDA), or a laptop computer. The wireless device 140 is useful to receive indications that an appliance needs maintenance, has an operational anomaly, is predicted to fail, or has failed. In one embodiment, mobile device 140 is a mobile phone and a suitable interface to the mobile phone, such as via network 110 to a cellular network (not shown) is contemplated to enable the mobile phone 140 to receive text or voice messages concerning status of alarms concerning monitored appliances. In another embodiment, an ad hoc network interface of the mobile phone 140 can be used via gateway 120 to accept direct local area transmission of status or alert messages via antennas 145 and antenna 125b respectively.

In Figure 1, the set of sensors 150 can monitor the activity of a number of devices/appliances. That is, each of the sensors measure a parameter, such as temperature, audio noise, energy, and the like, while multiple devices/appliances are in operation. Thus, each sensor, such as an IoT sensor, samples composite measurements of multiple appliances. As a result, each IoT sensor produces a composite of data that represents multiple devices/appliances running concurrently.

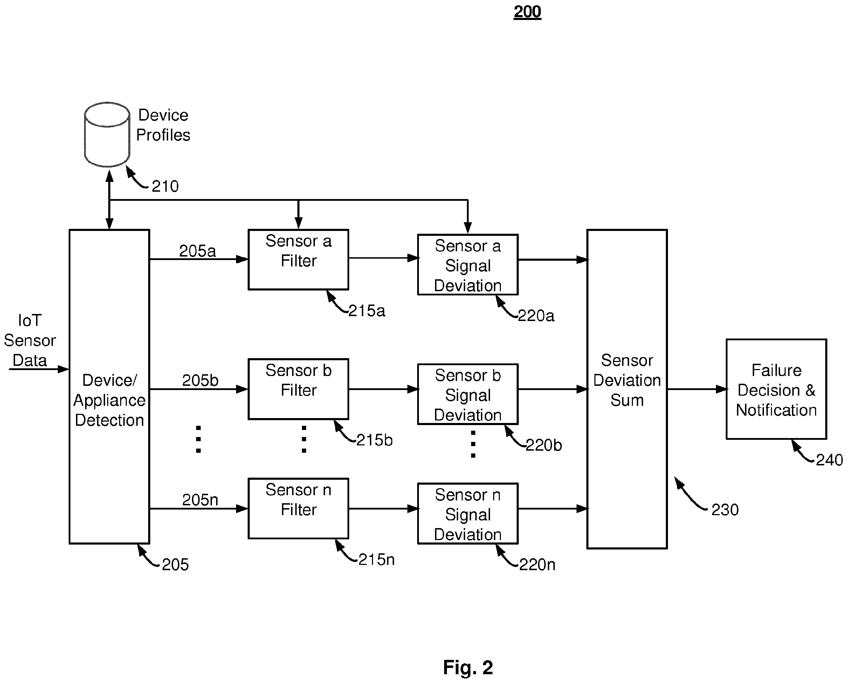

Figure 2 depicts a functional block diagram of processing in the gateway 120 to accommodate aspects of the disclosed innovation. A set of profiles of possible appliances in the environment may be stored in storage device 210. Storage device 210 may be either internal or external to the gateway 120. If internal, the storage device 210 may be either disk storage, solid state, such as RAM or ROM storage, optical, or any other storage type known in the art. If external, the storage device 210 may be either local or reside on a network, such as network 110. Appliance profiles can be downloaded via network 110, accessed via previously stored data on device 210, generated via a user training step, or learned automatically from the IoT sensor data from the environment. Storage device 210 also stores normal behavior sensor signals for appliances, such as, for example, normal audio for a dryer, normal gas consumption for a water heater, and the like.

The composite IoT sensor measurement or data is input to a device detection module 205. Using observed IoT sensor measurements or data and known device profiles, a determination is made of which appliance(s) are currently active in the environment. One implementation is using a matched filter approach. The outputs 205a, 205b through 205n of the appliance detection module 205 are composite sensor data of one of the devices/appliances which is currently operational and being detected by one or more of the IoT sensors or network provided parametric sensor data. Each one of the outputs 205a, 205b, through 205n represent an IoT sensor and its respective composite data for one device/appliance that is currently operational in the environment. If more than one appliance is operating simultaneously, then a flow through the processing elements of Figure 2 is performed multiple times. For example, if two appliances are active in the environment, then the operations of Figure 2 are performed twice using all of the IoT sensor paths; once for each device/appliance that is detected using the matched filter approach or other discrimination technique. Device/Appliance Detection block 205 detects one of the active devices/appliances at a time to process the composite IoT sensor data that represents multiple currently active appliances.

Sensor filtering blocks 215a, 215b, through 215n are filters used to discriminate for a specific device/appliance. For each sensor in the environment, the other detected devices/appliances in the environment are input along with the appropriate sensor profiles from the database 210. This filter block is used to filter out other devices/appliances that might be operating concurrently in the environment. For example, the audio signal from a dryer is isolated by removing audio from a concurrently running clothes washing machine. Examples of this operation include removing specific operating frequencies of other appliances, amplifying the known operating frequencies of the targeted appliance, or direct removal of other appliance signals via stored prior signals. The output from any specific filter block 215a, 215b, though 215n is filtered IoT sensor data for a specific device/appliance with other currently operating devices/appliances filtered out.

Sensor signal deviation blocks 220a, 220b, through 220n calculate the deviation, if any, from the filtered sensor data for a given device/appliance from block 215a, 215b, through 215n and the expected normal sensor data for one device/appliance from the database 210. The difference between the filtered sensor data for a particular device/appliance and the normal operating device/appliance sensor data from the database 210 can indicate a deviation from a normal operating condition for the device/appliance. The output of any particular sensor signal deviation block 220a, 220b, through 220n is the difference between current operating device IoT sensor data and normal operating device sensor data for a single device/appliance. The entire set of sensor deviation data outputs from blocks 220a, 220b, through 220n is a collection of deviations for one appliance.

Block 230 calculates the sum of all sensor deviation calculations from the outputs of blocks 220a, 220b, through 220n. The output of the 220a, 220b, through 220n blocks can be considered multiple votes on whether there is a failure. The higher the deviations, the higher the certainty of an anomaly or failure. In block 230, one implementation to aggregate all of these votes together is to sum all the deviation values. Normalization of deviation values is accomplished before summing. The output of sensor deviation sum 230 is used to input to the failure decision block 240. The failure decision block 240 is used to identify an anomaly in device/appliance operation and notify a user of a possible anomaly or failure condition. Failure decision block 240 may assess the sum of deviations for a device/appliance in comparison to a threshold or other criteria to inform a user of an anomaly. Alternately, the failure decision block 240 may be used to determine if a device or appliance is operating normally. A user may also be informed of normal device/appliance operation via a notification.

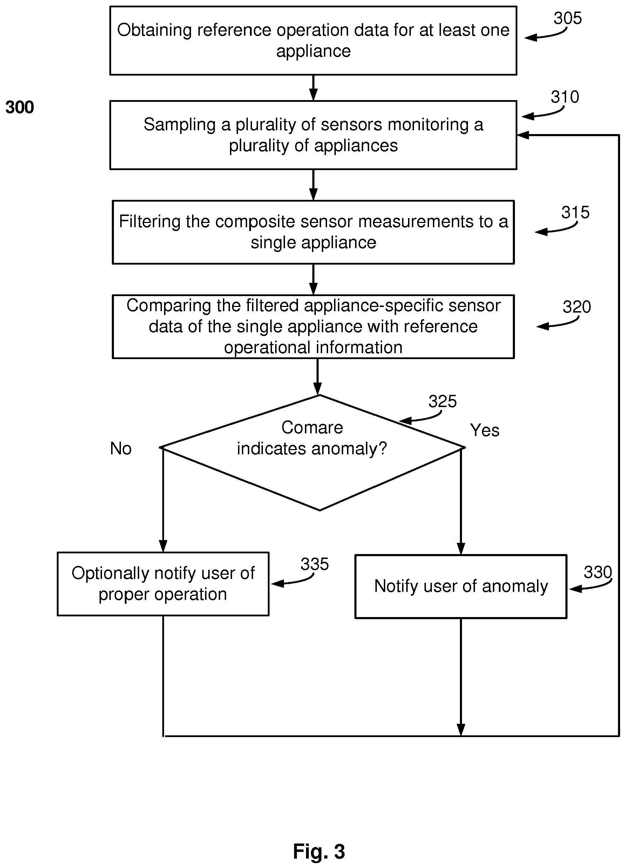

Figure 3 is an example flow diagram of a method 300 performed by a special purpose machine according principles of the disclosure. The method starts at step 305 by obtaining reference information concerning normal operating conditions and/or a behavior profile of a device or appliance. For example, obtaining appliance information can include acquisition of appliance profile information from a manufacturer. Thus, step 305 may include obtaining an existing profile of the particular appliance. Alternately, a set of historical data can be built up over time by observation of the appliance via the sensors to set up a reference profile of historical sensor data measurements for the particular appliance. In either event, such data may include energy input, temperature output, audio noise output, and vibration output during normal operation. Normally, step 305 need only be performed once per appliance under observation but may be updated occasionally as updates become available.

Step 310 acts to sample a plurality of sensors that concern a number of appliances. For example, the two or more appliances may be monitored using sensors that are not dedicated to only one appliance. That is, the sensor data is not indicative of a single appliance, but instead may receive sensory input from multiple appliances in measurement proximity to the two or more appliances. For example, a vibration sensor can measure the vibration effect of either a clothes washer or a dryer appliance or both but is not dedicated to either. Undedicated sensors are contemplated in the principles of the disclosure. Although dedicated appliance sensors are compatible with the principles of the disclosure, they are not a requirement. Thus, the undedicated sensor may be sampled and produce a composite measurement (composite sample) of the two or more appliances. Sampling of sensor data can include monitoring energy input, temperature output, audio noise output, and vibration output, and the like.

At step 315, the composite sample of sensor data is filtered to remove the sampled data that represents the other appliances that are in the sensor measurement environment. Step 315 separates out the sensor measurement contribution made by one appliance from the composite sensor measurement contributions made by the multiple appliances that concurrently share the same sensors. For example, an audio signal from an audio sensor located nearby both a clothes washing machine and a clothes dryer is sampled and filtered. The filtering of the sensor data for the clothes dryer includes removing audio from the concurrently running clothes washing machine. Thus, an appliance-specific sensor data output is produced at step 315. This filtering is essentially the step of disambiguation of multiple appliance contributions to sensor data to detect the sensor data measurement of one specific appliance. That is, sensor data that is acquired in step 310 can have contributions from one or multiple appliances. If multiple appliances are operating when the sensor data is sampled, then in order to separate the contribution of other appliances from the one specific appliance of interest, the filtering of step 315 is used to disambiguate the same results to detect an appliance-specific contribution that was made to the shared sensors used for multiple appliances. Thus, step 315 represents a transformation of the acquired sensor measurements from a composite sample of measurements to a single appliance-specific sample of measurements.

At step 320 a comparison of the appliance-specific sensor data is made with reference operational information from the appliance profile information for the specific appliance stored in database 210. Comparing the sensor information for a particular appliance with reference information for the particular appliance includes comparing the information for a particular appliance with reference information indicating one of more of (a) an existing profile of the particular appliance, and (b) historical data measurements for the particular appliance. At step 325, results of the compare are tested. If the data indicates an anomaly, such as operation outside the range of the normal appliance operational profile data stored in the database 210, then step 330 is invoked and a user is notified of an anomaly in the specific appliance. This detected anomaly may be associated with a potential failure of the appliance. In one embodiment, the results of the comparison of step 320 are tested in step 325 as exceeding a threshold. In this instance, the threshold can be user determined via an input from a user interface.

Notification at step 330 can include transmitting a message concerning the operation anomaly to a user and can include one or more of (a) an identification the particular appliance, (b) a confidence interval concerning potential failure of the particular appliance, and (c) a type a sensor involved in the operational anomaly. In one embodiment, the notification includes transmitting a message to a mobile phone.

If the comparison at step 320 is tested at step 325 and the operation is determined to be non-anomalous, then at step 335, then the user may be optionally notified of proper operation of the appliance. In either event of results 330 or 335, part of the process 300 is repeated by moving to step 310 where a new sampling of sensor data occurs so that the process may continue focusing on a different device/appliance than that of the first pass through method 300. It is to be noted that sensor data collected via sampling may apply to all of the appliances characterized by the system of Figure 2 and that each appliance is reflected as having an anomaly detection procedure 300 as described in the method of Figure 3.

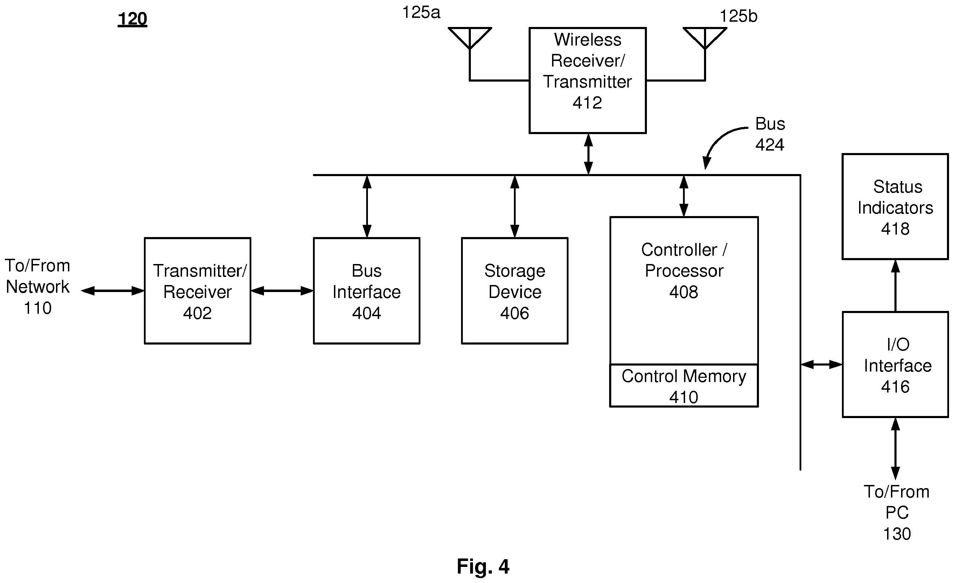

Figure 4 is an example block diagram embodiment of an apparatus to perform the method of Figure 3. The apparatus of Figure 4 can be either a special-purpose machine, or part of a larger machine that performs other tasks. For example, the apparatus of Figure 4 can be a home gateway that collects sensor information and also provides network access for other user tasks. Such a machine can be a gateway, a modem, a laptop, a personal computer, and the like. Here, for simplicity, the description can follow that of a home or business gateway, but other devices are also possible as is well understood by those of skill in the art.

The apparatus 120 of Figure 4 includes a transmitter/receiver interface 402 providing connectivity to a network 110. The interface 402 connects to the bus interface 404 which allows access to the internal bus 424. Other non-bus implementations are also possible as is well known to those of skill in the art. Present on bus 424 are a storage device 406 which can be used for any general storage such as retrieved or requested data and network management data, parameters, and programs. Storage device 406 may also serve as disk or solid-state storage of the device/appliance profile information. Main program or utility and other programs are under the control of controller/processor 408.

This controller/processor 408 may be a single processor or a multiplicity of processors performing the tasks of sensor data acquisition, user interface control, and resource management. Controller/processor 408 can perform the method described in Figure 3. Control memory 410 can supply program instruction and configuration control for controller/processor 408. The status indicators are a user interface 418 and allows a user, system owner, or system manager to see a status of the gateway apparatus 120. Such indicators may include a display, LEDs, printer interface, or data logging interface. An input/output (I/O) interface 416 allows the gateway 120 to connect to a personal computer or other device that can be used to configure and control the gateway functionality. The I/O interface 416 may be a hardline interface, such as an Ethernet interface or may operationally be substituted with an RF interface so that the gateway 120 can communicate with a PC via a protocol driven interface, such as IEEE 802.11. Alternately, a remote terminal, such as PC 135 may also be connected to a WLAN. Other interfaces that are possible via I/O interface 416 are an interactive interface which may include the use of a display device, keyboard, mouse, light pen, and the like.

Gateway 120 has a wireless network interface 412 which allows access to and from the sensor set 150. Such an interface includes all elements to control a wireless network, including the use of wireless network protocols such as IEEE 802.XX and the like. The wireless network interface includes a wireless receiver to receive sensor data and a wireless transmitter to transmit notification information, such as to a mobile device 140 for display to a user. The controller/processor 408 of the gateway 120 of Figure 4 is configured to provide processing services for the steps of the method of Figure 3. For example, the controller processor can provide instruction control to monitor and control the gateway network interface 402, the I/O interface 416 and 418 status indicators and display, and the wireless network interface 412.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device. Any and all embodiments may be combined into a single embodiment.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random-access memory ("RAM"), a read-only memory ("ROM") or any other magnetic, optical, or solid-state media. The instructions may form an application program tangibly embodied on a computer-readable medium such as any of the media listed above or known to those of skill in the art. The instructions thus stored are useful to execute elements of hardware and software to perform the steps of the method described herein. Thus, a computer program product includes instructions, which when executed by a computer, cause the computer to carry out the method of the present disclosure. Also, a computer readable data carrier is contemplated as having stored thereon instructions which when executed by a computer cause the computer to carry out the method of the present disclosure.

## Claims

1. A method to determine an operational status of an appliance, the method comprising:
sampling a plurality of sensors monitoring operation of a plurality of appliances, the sampling producing composite sensor measurements; at least one sensor not dedicated to any particular appliance;
filtering the composite sensor measurements for sensor data of one appliance, wherein the filtering removes sampled data that represents appliances other than the one appliance;
comparing the sensor data for the one appliance with reference information for the one appliance to determine if an operation anomaly is present in the one appliance;
transmitting a message concerning the operational status of the one appliance.

2. The method of claim 1, wherein transmitting a message concerning the operation of the one appliance to a user interface comprises transmitting a message concerning an operation anomaly of the one appliance.

3. The method of claim 2, wherein the operation anomaly is associated with a potential failure of the one appliance.

4. The method of any of claims 1 to 3, wherein sampling a plurality of sensors includes sampling energy input, temperature output, audio noise output, and vibration output.

5. The method of any of claims 1 to 4, wherein comparing the sensor data for the one appliance with reference information for the one appliance comprises comparing the sensor data for the one appliance with reference information indicating one of more of (a) an existing profile of the one appliance, and (b) historical data measurements for the one appliance.

6. The method of claim of any of claims 1 to 5, wherein transmitting a message concerning the operational status of the one appliance comprises transmitting a message comprising one or more of (a) an identification the one appliance, (b) a confidence interval concerning potential failure of the one appliance, and (c) a type of sensor involved in monitoring of an operation anomaly.

7. The method of any of claims 1 to 6, wherein transmitting a message concerning the operational status of the one appliance comprises transmitting a message to a mobile phone.

8. An apparatus to determine an operational status of an appliance, the apparatus comprising:
an interface to a network, the network accessing data from a plurality of sensors;
a processor in communication with the plurality of sensors via the network interface, the processor configured to;
sample the plurality of sensors during operation of a plurality of appliances, the sampling producing composite sensor measurements, the sensors not dedicated to any particular appliance;
filter the composite sensor measurements to detect sensor data for one appliance;
comparing the sensor data for the one appliance with reference information for the one appliance to determine if an operation anomaly is present; and
a transmitter to transmit a message concerning the operation anomaly to a user interface.

9. The apparatus of claim 8, wherein the apparatus is a gateway.

10. The apparatus of any of claims 8 or 9, wherein the apparatus transmits to a mobile device.

11. The apparatus of any of claims 8 to 10, wherein the interface to the network accesses the composite sensor measurements from a plurality of sensors using wireless communication.

12. A computer program product comprising instructions which when executed by a computer cause the computer to carry out the method of any of claims 1 to 5.

13. A computer readable data carrier having stored thereon instructions which when executed by a computer cause the computer to carry out the method of any of claims 1 to 5.
